# EUROPEAN PATENT SPECIFICATION

(11) **EP 1 111 885 B1**
(45) Date of publication and mention of the grant of the patent: **02.06.2004**
(21) Application number: 99125767.6
(22) Date of filing: 23.12.1999
(51) Int. Cl.: H04M 1/725

(54) **Portable telephone outputting a vibration signal as alarm signal**
Tragbares Telefon, das ein Schwingungssignal als Alarmsignal ausgibt
Téléphone portable émettant un signal vibratoire comme signal d'alerte

(43) Date of publication of application: 27.06.2001
(73) Proprietor: Sony International (Europe) GmbH, 10785 Berlin (DE)
(72) Inventor: Badtke, Rainer, Heisenbergbogen 1, 85609 Aschheim (DE)
(74) Representative: Körber, Martin, Dipl.-Phys.

(56) References cited:
- EP-A- 0 445 808
- EP-A- 0 887 985
- EP-A- 0 941 013
- US-A- 5 764 751

## Description

The present invention relates to a portable telephone for a wireless telecommunication system, with a loudspeaker for outputting acoustic signals, a microphone for receiving acoustic signals and an alarm means for outputting an alarm signal as an acoustic signal at a preset timepoint.

Such a portable telephone for a wireless telecommunication system is e.g. disclosed in EP 0 445 808 B1. The alarm means is thereby a ringer device enclosed in the battery casing. If, e.g., an incoming call is detected, the alarm means outputs an acoustic signal to indicate the incoming call to the user of the portable telephone. Further, in case that a preset timepoint input by a user, as e.g. a daily alarm, is reached, the alarm means outputs an acoustic signal to indicate the preset timepoint to a user. The alarm means thereby outputs the acoustic alarm signal even while the portable telephone is in a communication mode, in which a user communicates by means of the loudspeaker and the microphone. Thus, a user holding the portable telephone on his head during a normal telephone conversation hears the acoustic alarm signal output by the alarm means loudly and distinctively to get informed of an incoming call or a preset timepoint. Since the alarm means operates in a very small frequency band compared to the frequency band in which the normal loudspeaker of the portable telephone operates, and the effective sound pressure is very high, serious problems may arise. Since the user is holding the portable telephone to his head during normal communication mode, the acoustic alarm signal output with a high sound pressure from the alarm means may hurt the eardrum of the user. Further, the unexpected loud acoustic alarm signal may cause dangerous reactions if, e.g., the user is using the portable telephone during driving a car or the like. These problems are tried to be solved in EP 0 445 808 B1 by placing the alarm means on the lower part of the casing of the portable telephone opposite from the loudspeaker. However, the unexpected loud acoustic alarm signal output from the alarm means may still cause dangerous reactions from a user. Further, since the alarm means is placed close to the microphone in the lower part of the casing, the communication partner of the user may hear the alarm signal, which may cause dangerous reactions from him or at least cause irritations since the alarm signal is not intended for him.

The object of the present invention is therefore to provide a portable telephone for a wireless telecommunication system, with a loudspeaker for outputting acoustic signals, a microphone for receiving acoustic signals and an alarm means for outputting an alarm signal as an acoustic signal at a preset timepoint, whereby said alarm signal is output at a preset timepoint during a normal communication mode, in which a user communicates by means of the loudspeaker and the microphone, without the user and/or a communication partner of the user being disturbed.

This object is achieved by a portable telephone for a wireless telecommunication system according to claim 1, with a loudspeaker for outputting acoustic signals, a microphone for receiving acoustic signals, an alarm means for outputting an alarm signal as an acoustic signal at a preset timepoint, and a detecting means for detecting if the portable telephone is in a normal communication mode in which the user communicates by means of the loudspeaker and the microphone, whereby in case that said detecting means detects said normal communication mode at said preset timepoint, said alarm means is switched off and said alarm signal is output as a vibration signal by a vibrating means at said preset timepoint.

Thus, even when said preset timepoint arises during a normal communication mode, in which the user communicates by holding the portable telephone to his head, the output of the alarm signal does not disturb the user nor a communication partner of the user. The disadvantages of the prior art, as e.g. eventual dangerous reactions of a user hearing a very loud acoustic alarm signal while holding the portable telephone to his head can be strictly avoided. Further, since most portable telephones nowadays already comprise a vibrating means for indicating an incoming telephone call to a user by outputting vibration signals, the present invention can be implemented in a very simple and effective way without necessitating additional hardware components.

Advantageously, said alarm signal is additionally output as an optical signal at said timepoint in case that the detecting means detects the normal communication mode. In this case, the user has an additional optical indication that the preset timepoint has arisen. The optical signal may be output by a special means like an optical diode, or on the normal display of the portable telephone.

Further advantageously, said detecting means is adapted to detect if said portable telephone is in a headset communication mode, in which a user communicates by means of a headset connected to the portable telephone, whereby in case that said detecting means detects said headset communication mode, said alarm signal is output as a vibration signal by said vibrating means at said timepoint. A headset usually comprises a little microphone and one or two earpieces so that a user is able to communicate without holding the portable telephone to his head. However, since some users use to hold the portable telephone in their hand while using their headset, it is advantageous to output the alarm signal as a vibration signal since an acoustic alarm signal output from the alarm means of the portable telephone may be difficult to hear while wearing one or particularly two earpieces. Further, in case that the detecting means detects the headset communication mode, the alarm signal is additionally output as an optical signal at said timepoint. For example, in case that a user does not hold the portable telephone in his hand while being in a headset communication mode, he will not be able to feel the vibration signal so that it is important to give him an additional possibility of noticing the alarm signal. Additionally or alternatively, the alarm signal may additionally be output as an acoustic signal by said alarm means at said timepoint in case that the detecting means detects the headset communication mode. This last possibility may be advantageous in cases in which users use a headset with a long line or a remote transmission of signals between the headset and the portable telephone, so that the user gets notice that said preset timepoint has arisen even when he is not able to detect the vibration signal or the optical signal.

Further advantageously, the detecting means is adapted to detect if the portable telephone is in a handsfree communication mode in which a user communicates by means of a handsfree equipment connected to the portable telephone, whereby in case that the detecting means detects the handsfree communication mode, said alarm signal is output as an optical signal at said timepoint. Usual handsfree equipments as e.g. installed in cars or the like comprise a holding device for holding the portable telephone in a position in which the user driving the car is able to reach the keypad to dial numbers and see the display. The holding device usually is a plastics casing with a physical interface through which the portable telephone is connected to a separate radio receiver, loudspeakers, or the like depending on how the handsfree equipment is realised. The output of a vibration signal by a vibrating means at said preset timepoint while the portable telephone is in a handsfree communication mode might cause the portable telephone to fall out of the plastics casing or at least cause stress to mechanical parts of the portable telephone. In order to avoid such physical damage to the portable telephone caused by such mechanical vibrations the output of an optical signal is very advantageous. Particularly, since the display of the portable telephone being inserted in a holding device of a handsfree equipment is usually facing towards the user, this is a simple and effective possibility of notifying the user that said preset timepoint has arisen while avoiding mechanical damage to the portable telephone at the same time. In this case, the alarm means may be switched off and said alarm signal may be output as an acoustic signal by said handsfree equipment as said timepoint in case that the detecting means detects the handsfree communication mode. For example, the loudspeakers of the stereo system installed in a car might be used to output such an acoustic alarm signal. Alternatively, the alarm signal may be output as an acoustic signal by the alarm means at the timepoint in case that the detecting means detects the handsfree communication mode.

Further advantageously, the portable telephone according to the present invention comprises a timer means comprising a daily alarm function to output a daily alarm signal at a timepoint preset by a user. Hereby, the portable telephone according to the present invention may be used as an alarm clock, e.g. to wake up the user every morning. The corresponding timepoint may be input and preset by a user via the usual alphanumeric keypad of the portable telephone. Further, said timer means may comprise an event alarm function to output an alarm signal at a date and a timepoint preset by a user. For example, if a user would like to be reminded on an important date, he may input and preset that date and a timepoint at which he would like to be reminded. Further advantageously, the timer means may comprise a counter alarm function to output an alarm signal after a time period preset by a user has passed. In this case, the user might e.g. input and preset a time period of several minutes, hours or days. If the preset time period has passed, the alarm signal is output.

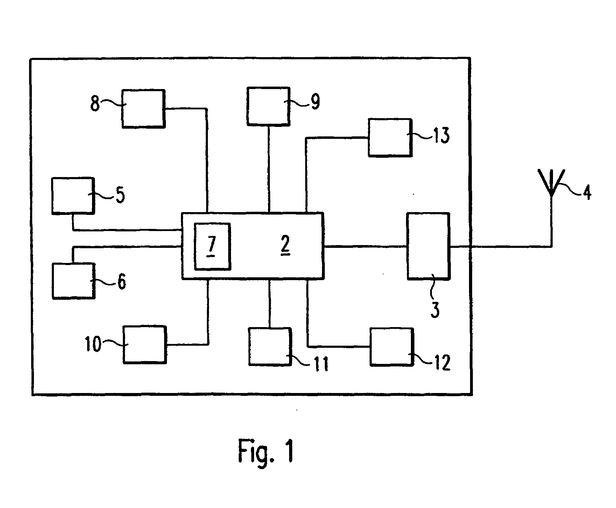

In the following description, the portable telephone according to the present invention is explained in more detail by means of a preferred embodiment thereof relating to the only figure 1, which shows a schematic block diagram of a portable telephone according to the present invention.

Figure 1 shows a schematic block diagram of a portable telephone 1 for a wireless telecommunication system, as e.g. the GSM or the UMTS system. The portable telephone 1 comprises a central control unit 2 as e.g. a microprocessor or a microchip, which controls the operation and the functions of the portable telephone 1. The central control unit 2 is connected to a transmitting and receiving means 3 which is in turn connected to an antenna 4. The portable telephone 1 transmits and receives information to and from other communication devices or base stations of the wireless telecommunication system via the antenna 4 and the transmitting and receiving means 3. Although not shown in figure 1, the portable telephone 1 comprises all necessary elements for an operation in a wireless telecommunication system, as e.g. coders, decoders, modulators, demodulators, etc.

The central control unit 2 is further connected to a microphone 5 and a loudspeaker 6. In a normal communication mode, a user holds the portable telephone 1 to his head to communicate with a communication partner by means of the loudspeaker 6 and the microphone 5. The loudspeaker 6 is usually located on a upper part of the casing of the portable telephone and outputs acoustic signals received over the air interface of the wireless telecommunication system and converted from an electronic format to an acoustic format by the loudspeaker 6. The microphone 5 is usually located at the lower part of the casing of the portable telephone 1 and receives acoustic signals, as e.g. speech signals from a user and converts the acoustic signals into electronic signals which are processed and transmitted over the air interface to a communication partner.

The central control unit 2 is further connected to an alarm means 8 for outputting acoustic alarm signals. The alarm means 8 may e.g. be a ringer which rings when a telephone call is received or when a preset timepoint is reached. It is to be noted that the alarm means 8 is usually outputting acoustic signals in a very narrow frequency band compared to the frequency band of the acoustic signals output by the loudspeaker 6. However, the acoustic signals output by the alarm means 8 are output with a much higher effective sound pressure to ensure that the acoustic alarm signal is heard even over a longer distance such as several meters.

The central control unit 2 is further connected to a timer means 13 comprising said several timer functions enabling a user to preset timepoints at which he would like to be reminded. For example, the timer means 13 may comprise a daily alarm function to output a daily alarm signal at a timepoint defined by a user. Further, the timer means 13 may comprise an event alarm function to output an alarm signal at a date and timepoint preset by a user. The timer means may further comprise a counter alarm function to output an alarm signal after a time period preset by a user has passed. At a preset timepoint, the timer means 13 outputs a corresponding signal to the central control unit 2, which in turn causes a corresponding alarm signal to be output. According to the present invention, the alarm signal is thereby output in different ways depending on the respective communication mode the portable telephone 1 is in. In order to be able to output an alarm signal depending on the communication mode of the portable terminal 1, the central control unit 2 comprises a detecting means 7 for detecting the communication mode of the portable terminal 1. Particularly, the detecting means 7 detects different communication modes in which a real time phone call is taking place between a user and a communication partner. A normal communication mode is hereby defined as a communication mode in which a user communicates by means of the loudspeaker 6 and the microphone 5, i.e. receives acoustic speech signals from the loudspeaker 6 and inputs acoustic speech signals to the microphone 5. In a headset communication mode, a user communicates by means of a headset connected to the portable phone 1, and in a handsfree communication mode, a user communicates by means of a handsfree equipment connected to the portable phone 1. The central control unit 2 is thereby connected to an interface 10, which provides a physical connection to external devices, like headset or handsfree equipment. In the headset communication mode as well as in the handsfree communication mode, the microphone 5 and the loudspeaker 6 are not used by the user for the communication, but an external microphone and loudspeaker comprised in the headset and handsfree equipment, respectively.

According to the present invention, in case that the detecting means 7 detects the normal communication mode at a preset timepoint, the alarm means 8 is switched off and the alarm signal is output as a vibration signal by a vibrating means 9 at the preset timepoint. The vibrating means 9 is thereby connected to the central control unit 2. In case that the portable telephone 1 comprises a vibrating means for indicating incoming telephone calls by outputting a vibration signal, the vibrating means 9 according to the present invention may be that same vibrating means. For example, the vibrating means 9 may thereby be comprised in a battery pack of the portable telephone 1. In case that the detecting means 7 detects the normal communication mode, the alarm signal may additionally be output as an optical signal at said timepoint. The optical signal may thereby be output by a special optical output means, such as a diode or the like, or as a corresponding symbol on the normal display of the portable telephone 1. In figure 1, the central control unit 2 is shown to be connected to such a normal display 11.

In case that the detecting means 7 detects that the portable telephone 1 is in the headset communication mode, the alarm signal is output as a vibration signal by the vibrating means 9 at said timepoint. Additionally, the alarm signal may be output as an optical signal, e.g. by the display 11, at said timepoint, in case that the detecting means 7 detects the headset communication mode. Alternatively or additionally, the alarm signal may be output as an acoustic signal by the alarm means 8 at said timepoint in case that the detecting means detects the headset communication mode.

In case that the detecting means 7 detects the handsfree communication mode, the alarm signal is output as an optical signal, e.g. on the display 11, at said timepoint. Further, in case that the detecting means detects the handsfree communication mode, the alarm means 8 may be switched off and the alarm signal is output as an acoustic signal by the handsfree equipment at said timepoint. Alternatively, the alarm signal is output as an acoustic signal by the alarm means 8 at said timepoint in case that the detecting means detects the handsfree communication mode.

It is to be understood that the portable telephone 1 according to the present invention further comprises all necessary elements to be operated by a user and for functioning in a wireless telecommunication system. Therefore, the portable telephone 1 according to the present invention may e.g. further comprise a keypad 12 connected to the central control unit 2, whereby the keypad 12 is a normal keypad of a portable telephone comprising the usual alphanumeric keys. These keys can be used by a user to input a corresponding timepoint information to the timer means 13 in order to preset a timepoint at which he wants to be notified by the alarm signal.

## Claims

1. Portable telephone (1) for a wireless telecommunication system, with
a loudspeaker (6) for outputting acoustic signals,
a microphone (5) for receiving acoustic signals,
an alarm means (8) for outputting an alarm signal as an acoustic signal at a preset timepoint, and
a detecting means (7) for detecting if the portable telephone is in a normal communication mode in which a user communicates by means of the loudspeaker (6) and the microphone (5), **characterised in that** in case that said detecting means (7) detects said normal communication mode at said preset timepoint, said alarm means (8) is switched off and said alarm signal is output as a vibration signal by a vibrating means (9) at said preset timepoint.

2. Portable telephone (1) according to claim 1,
**characterized in,**
**that** in case that said detecting means (7) detects said normal communication mode, said alarm signal is additionally output as an optical signal at said timepoint.

3. Portable telephone (1) according to claim 1 or 2, '
**characterized in,**
**that** said detecting means (7) is adapted to detect if said portable telephone is in a headset communication mode in which a user communicates by means of a headset connected to said portable telephone, whereby in case that said detecting means (7) detects said headset communication mode, said alarm signal is output as a vibration signal by said vibrating means (9) at said timepoint.

4. Portable telephone (1) according to claim 3,
**characterized in,**
**that** in case that said detecting means (7) detects said headset communication mode, said alarm signal is additionally output as an optical signal at said timepoint.

5. Portable telephone (1) according to claim 3 or 4,
**characterized in,**
**that** in case that said detecting means (7) detects said headset communication mode, said alarm signal is additionally output as an acoustic signal by said alarm means (8) at said timepoint.

6. Portable telephone (1) according to one of the claims 1 to 5,
**characterized in,**
**that** said detecting means (7) is adapted to detect if said portable telephone is in a handsfree communication mode in which a user communicates by means of a handsfree equipment connected to said portable telephone, whereby in case that said detecting means (7) detects said handsfree communication mode, said alarm signal is output as an optical signal at said timepoint.

7. Portable telephone (1) according to claim 6,
**characterized in,**
**that** in case that said detecting means (7) detects said handsfree communication mode, said alarm means (8) is switched off and said alarm signal is output as an acoustic signal by said handsfree equipment at said timepoint.

8. Portable telephone (1) according to claim 6,
**characterized in,**
**that** in case that said detecting means (7) detects said handsfree communication mode, said alarm signal (8) is output as an acoustic signal by said alarm means at said timepoint.

9. Portable telephone according to one of the claims 1 to 7,
**characterized by**
a timer means comprising a daily alarm function to output a daily alarm signal at a timepoint preset by a user.

10. Portable telephone (1) according to claim 9,
**characterized in,**
**that** said timer means (13) comprises an event alarm function to output an alarm signal at a date and timepoint preset by a user.

11. Portable telephone (1) according to claim 9 or 10,
**characterized in,**
**that** said timer means (13) comprises a counter alarm function to output an alarm signal after a time period preset by a user has passed.

## Patentansprüche

1. Tragbares Telefon (1) für ein drahtloses Telekommunikationssystem mit
einem Lautsprecher (6) zur Ausgabe von akustischen Signalen,
einem Mikrofon (5) zur Aufnahme von akustischen Signalen,
einer Alarmeinrichtung (8) zur Ausgabe eines Alarmsignals als akustisches Signal in einem voreingestellten Zeitpunkt und
einer Detektoreinrichtung (7) zum Detektieren, ob das tragbare Telefon sich in einem normalen Kommunikationsmodus befindet, in dem der Benutzer mit Hilfe des Lautsprechers (6) und des Mikrofons (5) kommuniziert,
**dadurch gekennzeichnet,**
**daß** die Alarmeinrichtung (8) ausgeschaltet wird und das Alarmsignal in dem voreingestellten Zeitpunkt von einer Vibrationseinrichtung (9) als Vibrationssignal ausgegeben wird, falls die Detektoreinrichtung (7) in dem genannten voreingestellten Zeitpunkt den normalen Kommunikationsmodus detektiert,

2. Tragbares Telefon (1) nach Anspruch 1,
**dadurch gekennzeichnet,**
**daß** das Alarmsignal in dem genannten Zeitpunkt zusätzlich als optisches Signal ausgegeben wird, falls die Detektoreinrichtung (7) den normalen Kommunikationsmodus detektiert.

3. Tragbares Telefon (1) nach Anspruch 1 oder 2,
**dadurch gekennzeichnet,**
**daß** die Detektoreinrichtung (7) so eingerichtet ist, daß sie detektieren kann, ob das tragbare Telefon sich in einem Kommunikationsmodus mit Kopfgarnitur befindet, in dem der Benutzer mit Hilfe einer mit dem tragbaren Telefon verbundenen Kopfgarnitur kommuniziert, wobei das Alarmsignal in dem genannten Zeitpunkt von der Vibrationseinrichtung (9) als Vibrationssignal ausgegeben wird, falls die Detektoreinrichtung (7) den Kommunikationsmodus mit Kopfgarnitur detektiert.

4. Tragbares Telefon (1) nach Anspruch 3,
**dadurch gekennzeichnet**,
das Alarmsignal in dem genannten Zeitpunkt zusätzlich als optisches Signal ausgegeben wird, falls die Detektoreinrichtung (7) den Kommunikationsmodus mit Kopfgarnitur detektiert.

5. Tragbares Telefon (1) nach Anspruch 3 oder 4,
**dadurch gekennzeichnet,**
**daß** das Alarmsignal in dem genannten Zeitpunkt von der Alarmeinrichtung (8) zusätzlich als akustisches Signal ausgegeben wird, falls die Detektoreinrichtung (7) den Kommunikationsmodus mit Kopfgarnitur detektiert.

6. Tragbares Telefon (1) nach einem der Ansprüche 1 bis 5,
**dadurch gekennzeichnet,**
**daß** die Detektoreinrichtung (7) so eingerichtet ist, daß sie detektieren kann, ob das tragbare Telefon sich in einem Freisprech-Kommunikationsmodus befindet, wobei das Alarmsignal in dem genannten Zeitpunkt als optisches Signal ausgegeben wird, falls die Detektoreinrichtung (7) den Freisprech-Kommunikationsmodus detektiert.

7. Tragbares Telefon (1) nach Anspruch 6,
**dadurch gekennzeichnet,**
**daß** die Alarmeinrichtung ausgeschaltet wird und das Alarmsignal in dem genannten Zeitpunkt von der Freisprecheinrichtung als akustisches Signal ausgegeben wird, falls die Detektoreinrichtung (7) den Freisprech-Kommunikationsmodus detektiert.

8. Tragbares Telefon (1) nach Anspruch 6,
**dadurch gekennzeichnet,**
**daß** das Alarmsignal in dem genannten Zeitpunkt von der Alarmeinrichtung (8) als akustisches Signal ausgegeben wird, falls die Detektoreinrichtung (7) den Freisprech-Kommunikationsmodus detektiert.

9. Tragbares Telefon (1) nach einem der Ansprüche 1 bis 7,
**gekennzeichnet durch**
eine Zeitgebereinrichtung, die eine Funktion für täglichen Alarm aufweist, um in einem von dem Benutzer voreingestellten Zeitpunkt ein tägliches Alarmsignal auszugeben.

10. Tragbares Telefon (1) nach Anspruch 9,
**dadurch gekennzeichnet,**
**daß** die Zeitgebereinrichtung (13) eine Ereignis-Alarmfunktion aufweist zur Ausgabe eines Alarmsignals an einem Datum und in einem Zeitpunkt, die von dem Benutzer voreingestellt sind.

11. Tragbares Telefon (1) nach Anspruch 9 oder 10,
**dadurch gekennzeichnet,**
**daß** die Zeitgebereinrichtung (13) eine Zähler-Alarmfunktion aufweist zur Ausgabe eines Alarmsignals nach Ablauf einer von dem Benutzer voreingestellten Zeitperiode.

## Revendications

1. Téléphone portable (1) pour un système de télécommunication sans fil comportant
un haut-parleur (6) pour délivrer lesdits signaux acoustiques,
un microphone (5) pour recevoir des signaux acoustiques,
des moyens d'avertissement (8) pour délivrer un signal d'avertissement en tant que signal acoustique à un instant préréglé, et
des moyens de détection (7) pour détecter si le téléphone portable est dans un mode de communication normal, dans lequel un utilisateur communique au moyen du haut-parleur (6) et du microphone (5),
**caractérisé en ce que** dans le cas où lesdits moyens de détection (7) détectent ledit mode de communication normale audit instant préréglé, lesdits moyens d'avertissement (8) sont débranchés et ledit signal d'avertissement est délivré sous la forme d'un signal vibratoire par des moyens vibratoires (9) audit instant préréglé.

2. Téléphone portable (1) selon la revendication 1, **caractérisé en ce**
**que** dans le cas où lesdits moyens de détection (7) détectent ledit mode de communication normal, ledit signal d'avertissement est délivré en outre sous la forme d'un signal optique audit instant.

3. Téléphone portable (1) selon la revendication 1 ou 2, **caractérisé en ce**
**que** lesdits moyens de détection (7) sont adaptés pour détecter si ledit téléphone portable est dans un mode de communication avec casque, dans lequel un utilisateur communique au moyen d'un casque connecté audit téléphone portable, ce qui a pour effet que dans le cas où lesdits moyens de détection (7) détectent le mode de communication avec casque, ledit signal d'avertissement est délivré en tant que signal vibratoire par lesdits moyens vibratoires (9) audit instant.

4. Téléphone portable (1) selon la revendication 3, **caractérisé en ce**
**que** dans le cas où lesdits moyens de détection (7) détectent ledit mode de communication avec casque, ledit signal d'avertissement est en outre délivré en tant que signal optique audit instant.

5. Téléphone portable (1) selon la revendication 3 ou 4, **caractérisé en ce**
**que** dans le cas où lesdits moyens de détection (7) détectent ledit mode de communication avec casque, ledit système d'avertissement est délivré en supplément en tant que signal acoustique par lesdits moyens d'avertissement (8) audit instant.

6. Téléphone portable (1) selon l'une des revendications 1 à 5, **caractérisé en ce**
**que** lesdits moyens de détection (7) sont adaptés pour détecter si un téléphone portable est dans un mode de communication à mains libres, dans lequel un utilisateur communique au moyen d'un équipement à mains libres connecté audit téléphone portable, ce qui a pour effet que dans le cas où lesdits moyens de détection (7) détectent ledit mode de communication à mains libres, ledit signal d'avertissement est délivré sous la forme d'un signal optique à cet instant.

7. Téléphone portable (1) selon la revendication 6, **caractérisé en ce**
**que** dans le cas où lesdits moyens de détection (7) détectent ledit mode de communication à mains libres, lesdits moyens d'avertissement (8) sont libérés et ledit signal d'avertissement est délivré en tant que signal acoustique par ledit équipement à mains libres audit. instant.

8. Téléphone portable (1) selon la revendication 6, **caractérisé en ce**
**que** dans le cas où lesdits moyens de détection (7) détectent ledit mode de communication à mains libres, ledit signal d'avertissement (8) est délivré en tant que signal acoustique par lesdits moyens d'avertissement audit instant.

9. Téléphone portable selon l'une des revendications 1 à 7, **caractérisé par**
des moyens formant minuterie comprenant une fonction d'avertissement journalière pour délivrer un signal d'avertissement journalier à un instant préréglé par un utilisateur.

10. Téléphone portable (1) selon la revendication 9, **caractérisé en ce**
**que** lesdits moyens formant minuterie (13) comprennent une fonction d'avertissement d'événement pour délivrer un signal d'avertissement à une date et à un instant préréglés par un utilisateur.

11. Téléphone portable (1) selon la revendication 9 ou 10, **caractérisé en ce**
**que** lesdits moyens formant minuterie (13) comprennent une fonction d'avertissement à compteur pour délivrer un signal d'avertissement après l'écoulement d'un intervalle de temps préréglé par un utilisateur.
